# EUROPEAN PATENT SPECIFICATION

(11) **EP 1 787 190 B1**
(45) Date of publication and mention of the grant of the patent: **05.07.2017**
(21) Application number: 05771285.3
(22) Date of filing: 04.08.2005
(51) Int. Cl.: G09G 5/00

(54) **DISPLAY APPARATUS AND CONTROL METHOD THEREOF**
ANZEIGEVORRICHTUNG UND VERFAHREN ZU IHRER ANSTEUERUNG
APPAREIL D'AFFICHAGE ET SON PROCEDE DE COMMANDE

(30) Priority: 06.08.2004 KR 2004062087
(43) Date of publication of application: 23.05.2007
(73) Proprietor: Samsung Electronics Co., Ltd., Suwon-si, Gyeonggi-do, 443-742 (KR)
(72) Inventor: PARK, Dong-Sik, Gyeonggi-do, 441-717 (KR); LEE, Sang-Hak, Seoul, 137-030 (KR); KIM, Young-Chan, Gyeonggi-do, 437-080 (KR)
(74) Representative: D'Halleweyn, Nele Veerle Trees Gertrudis
(86) International application number: PCT/KR2005/002541
(87) International publication number: WO 2006/014084

(56) References cited:
- GB-A- 2 356 540
- GB-A- 2 356 541
- JP-A- 08 223 513
- JP-A- 10 222 137
- US-A- 5 986 636
- US-A1- 2002 021 273

## Description

### FIELD OF THE INVENTION

The present general inventive concept relates to a display apparatus and a control method thereof, and more particularly, to a display apparatus and a control method thereof, in which an auto-adjustment function is performed according to display modes of an input video signal.

### BACKGROUND ART

Generally, a display apparatus receives a video signal of a predetermined display mode from a video signal source, such as a computer, a television broadcasting system, etc., thereby displaying a picture on a screen thereof. Such a display apparatus has been developed, that is, a cathode ray tube (CRT) has been replaced with a flat panel display, such as a liquid crystal display (LCD), a plasma display panel (PDP), etc.

As compared with a CRT type display apparatus, a flat panel display apparatus receives an analog video signal from a video signal source and converts the analog video signal into a digital video signal, thereby displaying a picture. Here, the flat panel display apparatus comprises an analog/digital (A/D) converter to convert the analog video signal into the digital video signal. Further, the digital video signal converted by the A/D converter is processed by a preset method and transmitted to an LCD panel or the PDP, thereby driving a pixel corresponding to the digital video signal and displaying the picture.

Meanwhile, a recently developed display apparatus has an additional function to change a display mode thereof properly when a resolution of the analog video signal is changed, which will be generally called an auto-adjustment function.

For example, the display mode of the video signal transmitted from the video signal source, such as a computer or the like, includes various resolutions of 640x480 at 60Hz; 640x480 at 75Hz; 800x600 at 60Hz; 1024x768 at 60Hz; 1600x1200 at 60Hz; 1920x1200 at 60Hz; and so on. Here, when the video signal having a resolution of 640x480 at 75Hz is transmitted from the video signal source to the display apparatus being set to have the display mode based on a resolution of 1024x768 at 60Hz, that is, when the resolution of the input video signal does not match the display mode of the display apparatus, the picture is not optimally displayed. Therefore, the auto-adjustment function compensates for a difference between the display mode of the display apparatus and the resolutions of the input video signal, thereby allowing the display apparatus to optimally display the picture according to the video signal.

Further, an auto-adjustment button is generally provided in a front of the display apparatus and used for performing the auto-adjustment function.

Also, there has been developed a display apparatus continuously applying the auto-adjustment function to the input video signal.

However, in a case of the display apparatus performing the auto-adjustment function using the auto-adjustment button, a user unskilled in the display apparatus is likely to misunderstand that a problem arises not in the display apparatus but in the video signal source, such as a computer, when a picture is not optimally displayed, e.g., when a position of a picture is moved to one side because the resolution of the input video signal does not match the display mode of the display apparatus.

Further, in a case of the display apparatus set to continuously apply the auto-adjustment function to the input video signal, the auto-adjustment function is performed even when the video signal outputted from the video signal source is temporarily changed in the display mode, e.g., in a case where the video signal provided during a booting process of the computer is different in the display mode from the video signal provided by an operating system of the computer. Thus, a user unskilled in the display apparatus is likely to regard alteration in a picture arising while the auto-adjustment function is performed, as an error occurring in the display apparatus or the computer. Particularly, in a case of the computer, the video signal provided during the booting process of the computer is very different in the resolution from the video signal provided by the operating system. Further, the video signal provided during the booting process of the computer has a lot of black regions, so that it is difficult to apply the auto-adjustment function to this video signal, so that the user is more likely to misunderstand that the computer or the display apparatus is in trouble.

Document US 2002/0021273 discloses an apparatus for processing image signals in a monitor system. The apparatus involves a switch and two paths: one which involves a scaler, which is taken when a resolution of an input image is supported by a display apparatus, and one which involves a converter followed by the scaler, which is taken when a resolution of an input image is not supported by a display apparatus.

Document GB 2356540 discloses display means capable of displaying input signals that exceed a monitor's maximum resolution. This is also a system in which one of two possible paths is chosen based on the answer to a certain question. In this case, the question is whether or not the resolution of the input image is higher than that of a monitor. If it is, the sampling clock is set to half a normal clock, and a frame is built with a proper resolution. If it is not, the input image is sampled to sampling clock corresponding to the input image, and the frame is again built with a proper resolution.

### DISCLOSURE OF INVENTION

The present general inventive concept provides a display apparatus and a control method thereof, in which an auto-adjustment function is performed according to display modes of an input video signal.

Additional aspects and advantages of the present general inventive concept will be set forth in part in the description which follows and, in part, will be obvious from the description, or may be learned by practice of the general inventive concept.

The foregoing and/or other aspects and advantages of the present general inventive concept may be achieved by providing a method of controlling a display apparatus displaying a picture based on an input video signal including a horizontal synchronous signal and a vertical synchronous signal, the method comprising setting one or more exclusive display modes, setting whether to apply an auto-adjustment function to the video signal, determining a display mode of the video signal according to the horizontal and vertical synchronous signals when the auto-adjustment function is set to operate, and performing the auto-adjustment function when the determined display mode is not equal to any one of the one or more exclusive display modes.

The one or more exclusive display modes may include the display mode of the video signal provided during a booting process of a computer that outputs the video signal to the display apparatus.

The performing of the auto-adjustment function may comprise detecting a back porch interval of the video signal according to the horizontal and vertical synchronous signals, detecting an H-total value of the video signal according to the horizontal and vertical synchronous signals, and performing the auto-adjustment function either when the detected back porch interval is not equal to a preset back porch interval or when the detected H-total value is not equal to a preset H-total value.

The foregoing and/or other aspects and advantages of the present general inventive concept may also be achieved by providing a display apparatus to display a picture based on an input video signal including a horizontal synchronous signal and a vertical synchronous signal, the display apparatus comprising a data storage to store information about one or more exclusive display modes, an auto-adjustment setter to set whether to apply an auto-adjustment function to the video signal, and a controller to determine a display mode of the video signal according to the horizontal and vertical synchronous signals when the auto-adjustment function is set to operate by the auto adjustment setter, and to perform the auto-adjustment function when the determined display mode is not equal to any one of the one or more exclusive display modes.

The one or more exclusive display modes may include the display mode of the video signal provided during a booting process of a computer that outputs the video signal to the display apparatus.

The controller may detect either a back porch interval or an H-total value of the video signal according to the horizontal and vertical synchronous signals, and may perform the auto-adjustment function either when the detected back porch interval is not equal to a preset back porch interval or when the detected H-total value is not equal to a preset H-total value.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a control block diagram illustrating a display apparatus according to an embodiment of the present general inventive concept;
FIGS. 2 and 3 are control flowcharts illustrating a method of a display apparatus according to an embodiment of the present general inventive concept; and

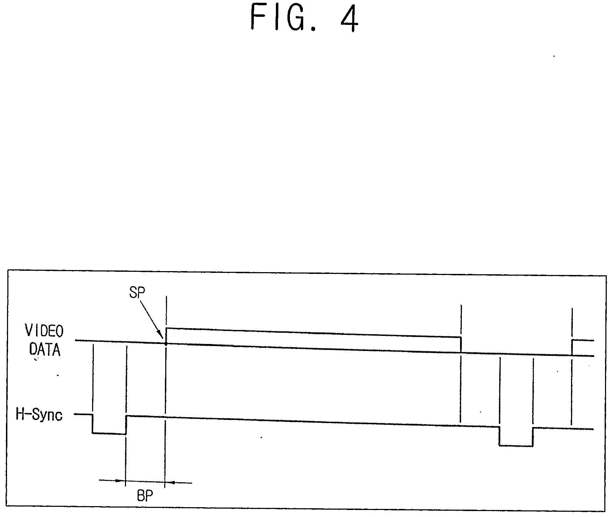

FIG. 4 is a view illustrating a timing chart between image data and a horizontal synchronous signal of a video signal in the method of the display apparatus of FIGS. 1 through 3.

### MODES FOR CARRYING OUT THE INVENTION

Reference will now be made in detail to the embodiments of the present invention, examples of which are illustrated in the accompanying drawings, wherein like reference numerals refer to like elements throughout. The embodiments are described below in order to explain the present general inventive concept by referring to the figures.

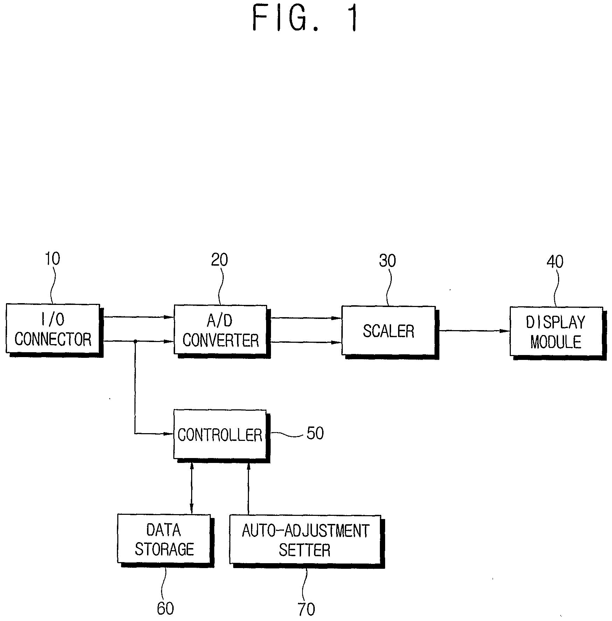

As shown in FIG. 1, a display apparatus according to an embodiment of the present general inventive concept comprises an I/O connector 10, an A/D converter 20, a scaler 30, a display module 40, a data storage 60, an auto-adjustment setter 70, and a controller 50.

The I/O connector 10 receives an analog video signal from a video signal source, such as a computer, a television broadcasting system, or the like. The analog video signal includes analog video data, and horizontal and vertical synchronous signals.

The I/O connector 10 may comprise one of various types of connectors to receive the video signal of various formats. For example, the I/O connector 10 may be at least one of a D-sub connector, a composite video broadcast signal (CVBS) connector, an S-video connector, and a component connector in order to receive the analog video signal.

The A/D converter 20 converts the analog video signal inputted through the I/O connector 10 into a digital video signal. Further, the digital video signal outputted from the A/D converter 20 is scaled through the scaler 30 and transmitted to the display module 40.

The display module 40 displays a picture on a screen according to the digital video signal received from the scaler 30. The display module 40 includes an LCD module, a PDP module or the like as long as it can display the picture according to the digital video signal outputted from the scaler 30.

The auto-adjustment setter 70 is employed to set whether to perform an auto-adjustment function. The auto-adjustment setter 70 can be provided as a button placed in a front of the display apparatus, or as a remote controller. When the auto-adjustment function is set to operate by a user through the auto-adjustment setter 70, the controller 50 controls the auto-adjustment function to be continuously applied to the input video signal.

The data storage 60 stores information about one or more exclusive display modes. Here, the one or more exclusive display modes may include a display mode of a video signal to which the controller 50 does not apply the auto-adjustment function even though the auto-adjustment function is set to operate through the auto-adjustment setter 70.

The one or more exclusive display modes may include a display mode of a video signal transmitted from a computer to the display apparatus when the computer is booted. The video signal outputted when the computer is booted, may include one of the display modes, such as resolutions of 640x350 at 85Hz; 640x480 at 60Hz; 720x400 at 85Hz; 800x600 at 60Hz; and so on, which can be selected as the exclusive display mode. The one or more exclusive display mode can be input to the data storage 60 through an input unit provided in the display apparatus or the video input source, such as the computer.

The controller 50 controls the A/D converter 20, the scaler 30 and the display module 40 according to a preset setting variance in order to adjust a display state of a picture displayed on the display module 40. Here, the setting variance to adjust the display state of the picture can be stored in a memory (not shown), such as an EEPROM (electrical erasable programmable read only memory), or can be stored in the data storage 60.

Further, the controller 50 determines the display mode of the input video signal according to the horizontal and vertical synchronous signals inputted through the I/O connector 10. Here, when the determined display mode matches one of the one or more exclusive display modes, the controller 50 does not perform the auto-adjustment function even though the auto-adjustment function is set to operate. That is, when the auto-adjustment function is set to operate, the controller 50 performs the auto-adjustment function only when the determined display mode does not match any one of the one or more exclusive display modes.

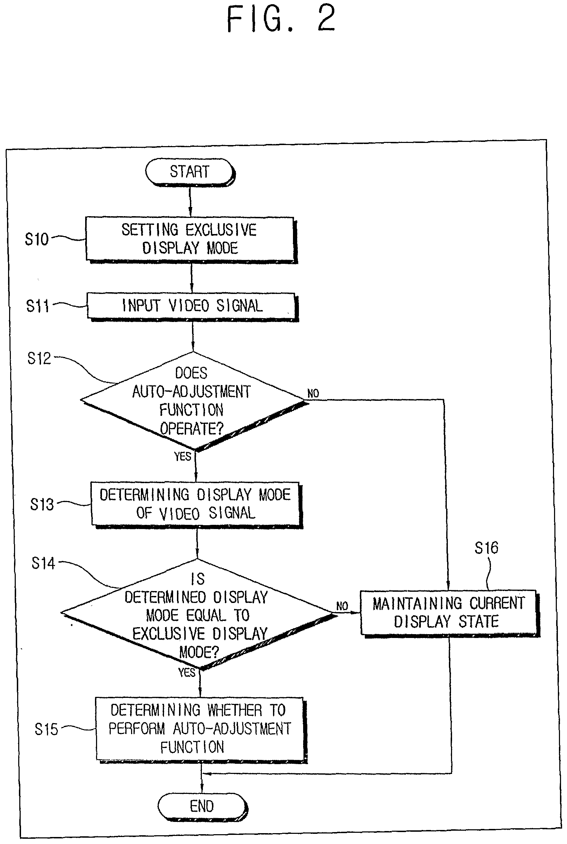

Hereinbelow, a method of controlling a display apparatus according to another embodiment of the present general inventive concept will be described with reference to FIGS. 1 and 2.

First, at operation S10, the exclusive display modes are selected and stored in the data storage 60. At operation S11, when a video signal is inputted, at operation S12, the controller 50 checks whether the auto-adjustment function is set to operate or not. In this embodiment, resolutions of 640x350 at 85Hz; 640x480 at 60Hz; 720x400 at 85Hz; and 800x600 at 60Hz may be selected as the one or more exclusive display modes.

When the auto-adjustment function is set to operate, at operation S13, the controller 50 determines the display mode of the video signal according to the horizontal and vertical synchronous signals.

Then, at operation S14, the controller 50 determines whether the determined display mode matches one of the one or more exclusive display modes. At this time, when the determined display mode matches one of the one or more exclusive display modes, e.g., when the video signal has a display mode of 800x600 at 60Hz, at operation S16, the controller 50 does not perform the auto-adjustment function and maintains the display state of the picture displayed on the display module 40 as currently displayed. Here, when it is checked that the auto-adjustment function is set not to operate at the operation S12, the controller 50 maintains the display state of the picture displayed on the display module 40 as currently displayed, at operation S16.

On the other hand, when the determined display mode does not match any one of the one or more exclusive display modes, the controller 50 determines whether to perform the auto-adjustment function according to the display mode of the input video signal.

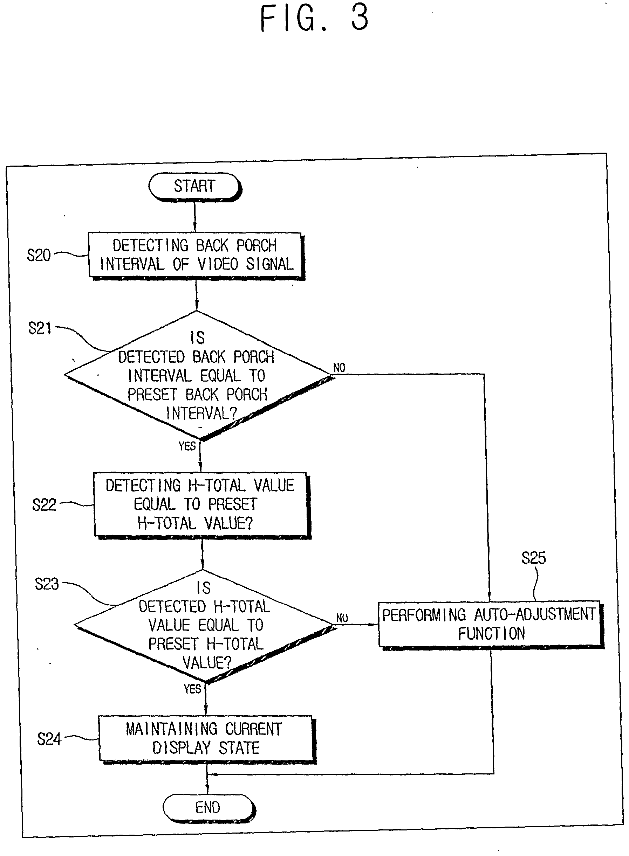

Hereinbelow, the process of determining whether to apply the auto adjustment function to the input video signal in the controller 50 at the operation S15 of FIG. 2 will be described with reference to FIGS. 1 through 3.

First, at operation S20, the controller 50 detects a back porch (BP) interval of the input video signal from the horizontal and vertical synchronous signals. Here, the BP interval represents an interval between the horizontal synchronous signal and a start point (SP) of effective video data of the input video signal.

Then, at operation S21, the controller 50 determines whether the detected BP interval is equal to a preset BP interval. When the detected BP interval is not equal to the preset BP interval, at operation S25, the controller 50 controls the A/D converter 20, the scaler 30 and the display module 40 to perform the auto-adjustment function.

On the other hand, when the detected BP interval is equal to the preset BP interval, at operation S22, the controller 50 detects an H-total value of the video signal from the horizontal and vertical synchronous signals.

Then, at operation S23, the controller 50 determines whether the detected H-total value is equal to a preset H-total value or not. When the detected H-total value is not equal to a preset H-total value, at operation S25, the controller 50 controls the A/D converter 20, the scaler 30 and the display module 40 to perform the auto-adjustment function.

Oppositely, when the detected H-total value is equal to the preset H-total value, at operation S24, the controller 50 maintains the display state of the picture displayed on the display module 40 as currently displayed.

In the foregoing embodiment, the process of detecting the BP interval is performed prior to the process of detecting the H-total value. However, the process of detecting the H-total value may be performed prior to the process of detecting the BP interval.

As described above, the auto-adjustment function is performed according to the display modes of the video signal by selecting one or more exclusive display modes, setting whether to apply the auto-adjustment function to the video signal, determining the display mode of the video signal according to the horizontal and vertical synchronous signal when the auto-adjustment function is set to operate, and performing the auto-adjustment function when the determined display mode does not match any one of the one or more exclusive display modes.

Thus, even though the video signal provided at the booting process of the computer or the like is different in the display mode from the video signal provided by the operating system, the auto-adjustment function is not applied to the video signal provided during the booting process.

As described above, the present general inventive concept provides a display apparatus and a control method thereof, in which an auto-adjustment function is performed according to display modes of an input video signal.

Although a few embodiments of the present invention have been shown and described, it will be appreciated by those skilled in the art that changes may be made in these embodiments without departing from the principles of the invention, the scope of which is defined in the appended claims and their equivalents.

## Claims

1. A method of controlling a display apparatus displaying a picture corresponding to an input video signal, said input video signal having a display mode including a resolution of said input video signal, the method comprising:
storing information about one or more exclusive display modes, said one or more exclusive display modes including a display mode in which the input video signal outputted from a video signal source is temporarily changed; and
selectively applying the auto-adjustment function to the input video signal according to the display mode of the input video signal and the one or more exclusive display modes such that the auto-adjustment function is performed when the determined display mode is not equal to any one of the one or more exclusive display modes.

2. The method of claim 1, wherein said input video signal includes a horizontal synchronous signal and a vertical synchronous signal, the method further comprising:
setting the one or more exclusive display modes prior to said storing information about one or more exclusive display modes;
setting whether to apply the auto-adjustment function to the video signal;
determining the display mode of the video signal according to the horizontal and vertical synchronous signals when the auto-adjustment function is set to operate.

3. The method according to claim 2, wherein the one or more exclusive display modes include the display mode of the video signal provided during a booting process of a computer that outputs the video signal to the display apparatus.

4. The method according to claim 3, wherein the performing of the auto-adjustment function comprises:
detecting a back porch interval of the video signal from at least one of the horizontal and vertical synchronous signals;
detecting an H-total value of the video signal from at least one of the horizontal and vertical synchronous signals; and
performing the auto-adjustment function either when the detected back porch interval is not equal to a preset back porch interval or when the detected H-total value is not equal to a preset H-total value.

5. A display apparatus for displaying a picture based on an input video signal, said input video signal having a display mode including a resolution of said input video signal, the display apparatus comprising:
a data storage to store information about one or more exclusive display modes, said one or more exclusive display modes including a display mode in which the input video signal outputted from a video signal source is temporarily changed; and
a controller to selectively apply the auto-adjustment function to the input video signal according to the display mode of the input video signal and the one or more exclusive display modes, such that the auto-adjustment function is performed when the determined display mode is not equal to any one of the one or more exclusive display modes.

6. The display apparatus according to claim 5, further comprising:
a display module; and
a scaler to selectively adjust a display state of the input video signal according to a first display state, in which the auto-adjustment function is applied, and a second display state, in which the auto-adjustment function is not applied, so that a picture corresponding to the input video signal is displayed on the display module according to the selectively adjusted display state.

7. The display apparatus according to claim 6,
wherein the scaler adjusts the display state of the input video signal according to the first display state when the display mode of the input video signal is not the one or more exclusive display modes, and adjusts the display state of the input video signal according to the second display state when the display mode of the input video signal is one of the one or more exclusive display modes.

8. The display apparatus according to claim 5,
wherein the controller selectively applies the auto-adjustment function to the input video signal according to a determination of whether the display mode of the input video signal matches the one or more exclusive display modes.

9. The display apparatus according to claim 5,
wherein the controller applies the auto-adjustment function to the input video signal when the display mode of the input video signal does not match one of the one or more exclusive display modes, and does not apply the auto-adjustment function to the input video signal when the display mode of the input video signal matches one of the one or more exclusive display modes.

10. The display apparatus according to claim 5,
wherein the controller prevents the auto-adjustment function from being automatically applied to the input video signal.

11. The display apparatus according to claim 5,
wherein the input video signal is generated from a computer during booting the computer.

12. The display apparatus according to claim 11,
wherein the one or more exclusive display modes include the display mode of the video signal provided during the booting process of the computer.

13. The display apparatus according to claim 5,
wherein the input video signal comprises horizontal and vertical synchronous signals, and the controller selectively applies the auto-adjustment function to the input video signal according to a characteristic of at least one of the horizontal and vertical synchronous signals.

14. The display apparatus according to claim 13,
wherein the characteristic of the at least one of the horizontal and vertical synchronous signals comprises a back porch interval.

15. The display apparatus according to claim 14,
wherein the controller is configured to perform the auto-adjustment function when the detected back porch interval is not equal to a preset back porch interval.

16. The display apparatus according to claim 13,
wherein the characteristic of the at least one of the horizontal and vertical synchronous signals comprises an H-total value of the input video signal.

17. The display apparatus according to claim 16,
wherein the controller is configured to perform the auto-adjustment function when the detected H-total value is not equal to a preset H-total value.

18. The display apparatus according to claim 13, further comprising:
an auto-adjustment setter to set the auto-adjustment function to be applied to input video signals having different display modes,
wherein the controller prevents the auto-adjustment function from being applied to the input video signal according to the display mode of the input video signal, the one or more exclusive display modes, and the characteristic of the at least one of the horizontal and vertical synchronous signals.

19. The display apparatus according to claim 5, further comprising:
an auto-adjustment setter to set the controller to apply the auto-adjustment function to the input video signal,
wherein the controller does not apply the auto-adjustment function to the input video signal when the display mode of the input video signal corresponds to the one or more exclusive display modes.

20. The display apparatus according to claim 5, wherein the one or more exclusive display modes is one of resolutions of 640x350 at 85Hz, 640x480 at 60Hz, 720x400 at 85Hz, and 800x600 at 60Hz.

## Patentansprüche

1. Verfahren zur Steuerung einer Anzeigevorrichtung, die ein mit einem eingegebenen Videosignal korrespondierendes Bild anzeigt, wobei das eingegebene Videosignal einen Anzeigemodus umfasst, welcher eine Auflösung des eingegebenen Videosignals beinhaltet, wobei das Verfahren umfasst:
Speichern von Informationen über einen oder mehrere exklusive Anzeigemodi, wobei der eine oder die mehreren exklusiven Anzeigemodi einen Anzeigemodus beinhalten, in dem das eingegebene Videosignal, das aus einer Videosignalquelle ausgegeben wird, vorübergehend verändert wird; und
wahlweises Anwenden einer automatischen Justierfunktion an dem eingegebenen Videosignal gemäß dem Anzeigemodus des eingegebenen Videosignals und dem einen oder den mehreren exklusiven Anzeigemodi derart, dass die automatische Justierfunktion durchgeführt wird, wenn der festgelegte Anzeigemodus nicht gleich mit dem einen oder den mehreren exklusiven Anzeigemodi ist.

2. Verfahren gemäß Anspruch 1, wobei das eingegebene Videosignal ein Horizontalsynchronsignal und ein Vertikalsynchronsignal beinhaltet, wobei das Verfahren weiterhin umfasst:
Einstellen eines oder mehrerer exklusiver Anzeigemodi vor dem Speichern von Informationen über einen oder mehrere exklusive Anzeigemodi;
Einstellen, ob die automatische Justierfunktion an dem Videosignal angewendet werden soll;
Bestimmen des Anzeigemodus des Videosignals gemäß dem Horizontalsynchronsignal und dem Vertikalsynchronsignal, wenn die automatische Justierfunktion zum Betrieb eingestellt worden ist.

3. Verfahren gemäß Anspruch 2, wobei der eine oder die mehreren exklusiven Anzeigemodi den Anzeigemodus des Videosignals beinhalten, das während eines Urladeprozesses eines Computers, der das Videosignal an die Anzeigevorrichtung ausgibt, zur Verfügung gestellt wurde.

4. Verfahren gemäß Anspruch 3, wobei das Durchführen der automatischen Justierfunktion umfasst:
Erfassen eines Back-Porch-Intervalls des Videosignals aus dem Horizontalsynchronsignal und/oder dem Vertikalsynchronsignal;
Erfassen eines H-Gesamtwerts des Videosignals aus dem Horizontalsynchronsignal und/oder dem Vertikalsynchronsignal; und
Durchführen der automatischen Justierfunktion entweder, wenn der erfasste Back-Porch-Intervall nicht gleich mit einem vorgegebenen Back-Porch-Intervall ist, oder wenn der erfasste H-Gesamtwert nicht gleich mit einem vorgegebenen H-Gesamtwert ist.

5. Anzeigevorrichtung zur Anzeige eines Bildes basierend auf einem eingegebenen Videosignal, wobei das eingegebene Videosignal einen Anzeigemodus umfasst, welcher eine Auflösung des eingegebenen Videosignals beinhaltet, wobei die Anzeigevorrichtung umfasst:
einen Datenspeicher zum Speichern von Informationen über einen oder mehrere exklusive Anzeigemodi, wobei der eine oder die mehreren exklusiven Anzeigemodi einen Anzeigemodus beinhalten, in dem das eingegebene Videosignal, das aus einer Videosignalquelle ausgegeben wird, vorübergehend verändert wird; und
eine Steuerung für ein wahlweises Anwenden der automatischen Justierfunktion an dem eingegebenen Videosignal gemäß dem Anzeigemodus des eingegebenen Videosignals und dem einen oder den mehreren exklusiven Anzeigemodi derart, dass die automatische Justierfunktion durchgeführt wird, wenn der festgelegte Anzeigemodus nicht gleich mit dem einen oder den mehreren exklusiven Anzeigemodi ist.

6. Anzeigevorrichtung gemäß Anspruch 5, die weiterhin umfasst:
ein Anzeigemodul; und
einen Skalierer zum wahlweisen Justieren eines Anzeigestatus des eingegebenen Videosignals gemäß einem ersten Anzeigestatus, in dem die automatische Justierfunktion angewendet wird, und einem zweiten Anzeigestatus, in dem die automatische Justierfunktion nicht angewendet wird, so dass ein mit dem eingegebenen Videosignal korrespondierendes Bild gemäß dem wahlweise justierten Anzeigestatus auf dem Anzeigemodul angezeigt wird.

7. Anzeigevorrichtung gemäß Anspruch 6, wobei der Skalierer den Anzeigestatus des eingegebenen Videosignals gemäß dem ersten Anzeigestatus justiert, wenn es sich bei dem Anzeigemodus des eingegebenen Videosignals nicht um den einen oder die mehreren exklusiven Anzeigemodi handelt, und den Anzeigestatus des eingegebenen Videosignals gemäß dem zweiten Anzeigestatus justiert, wenn es sich bei dem Anzeigemodus des eingegebenen Videosignals um den einen oder die mehreren exklusiven Anzeigemodi handelt.

8. Anzeigevorrichtung gemäß Anspruch 5, wobei die Steuerung wahlweise die automatische Justierfunktion an dem eingegebenen Videosignal anwendet gemäß einer Bestimmung, ob der Anzeigemodus des eingegebenen Videosignals mit dem einen oder den mehreren exklusiven Anzeigemodi übereinstimmt.

9. Anzeigevorrichtung gemäß Anspruch 5, wobei die Steuerung die automatische Justierfunktion an dem eingegebenen Videosignal anwendet, wenn der Anzeigemodus des eingegebenen Videosignals nicht mit einem aus dem einen oder den mehreren exklusiven Anzeigemodi übereinstimmt, und die automatische Justierfunktion an dem eingegebenen Videosignal nicht anwendet, wenn der Anzeigemodus des eingegebenen Videosignals mit einem aus dem einen oder den mehreren exklusiven Anzeigemodi übereinstimmt.

10. Anzeigevorrichtung gemäß Anspruch 5, wobei die Steuerung verhindert, dass die automatische Justierfunktion automatisch an dem eingegebenen Videosignal angewendet wird.

11. Anzeigevorrichtung gemäß Anspruch 5, wobei das eingegebene Videosignal von einem Computer erzeugt wird während eines Urladeprozesses des Computers.

12. Anzeigevorrichtung gemäß Anspruch 11, wobei der eine oder die mehreren exklusiven Anzeigemodi den Anzeigemodus des Videosignals beinhalten, das während eines Urladeprozesses des Computers zur Verfügung gestellt wurde.

13. Anzeigevorrichtung gemäß Anspruch 5, wobei das eingegebene Videosignal Horizontal- und Vertikalsynchronsignale umfasst, und die Steuerung wahlweise die automatische Justierfunktion an dem eingegebenen Videosignal gemäß einer Eigenschaft des Horizontal- und/oder Vertikalsynchronsignals anwendet.

14. Anzeigevorrichtung gemäß Anspruch 13, wobei die Eigenschaft des Horizontal- und/oder Vertikalsynchronsignals einen Back-Porch-Intervall umfasst.

15. Anzeigevorrichtung gemäß Anspruch 14, wobei die Steuerung dazu konfiguriert ist, die automatische Justierfunktion durchzuführen, wenn der erfasste Back-Porch-Intervall nicht gleich mit einem vorgegebenen Back-Porch-Intervall ist.

16. Anzeigevorrichtung gemäß Anspruch 13, wobei die Eigenschaft des Horizontal- und/oder Vertikalsynchronsignals einen H-Gesamtwert des eingegebenen Videosignals umfasst.

17. Anzeigevorrichtung gemäß Anspruch 16, wobei die Steuerung dazu konfiguriert ist, die automatische Justierfunktion durchzuführen, wenn der erfasste H-Gesamtwert nicht gleich mit einem vorgegebenen H-Gesamtwert ist.

18. Anzeigevorrichtung gemäß Anspruch 13, die weiterhin umfasst:
eine Einstelleinrichtung für die automatische Justierfunktion zur Einstellung der Anwendung der automatischen Justierfunktion an eingegebenen Videosignalen mit unterschiedlichen Anzeigemodi, wobei die Steuerung verhindert, dass die automatische Justierfunktion an dem eingegebenen Videosignal angewendet wird, je nach dem Anzeigemodus des eingegebenen Videosignals, dem einen oder den mehreren exlusiven Anzeigemodi und der Eigenschaft des Horizontal- und/oder Vertikalsynchronsignals.

19. Anzeigevorrichtung gemäß Anspruch 5, die weiterhin umfasst:
eine Einstelleinrichtung für die automatische Justierfunktion zum Einstellen der Steuerung, so dass diese die automatische Justierfunktion an dem eingegebenen Videosignal anwendet,
wobei die Steuerung die automatische Justierfunktion an dem eingegebenen Videosignal nicht anwendet, wenn der Anzeigemodus des eingegebenen Videosignals mit einem aus dem einen oder den mehreren exklusiven Anzeigemodi übereinstimmt.

20. Anzeigevorrichtung gemäß Anspruch 5, wobei es sich bei dem einen oder den mehreren exklusiven Anzeigemodi um eine der folgenden Auflösungen handelt: 640 x 350 bei 85 Hz, 640 x 480 bei 60 Hz, 720 x 400 bei 85 Hz und 800 x 600 bei 60 Hz.

## Revendications

1. Procédé de commande d'un appareil d'affichage permettant de visualiser une image correspondant à un signal vidéo d'entrée, ledit signal vidéo d'entrée présentant un mode d'affichage comportant la résolution dudit signal vidéo d'entrée, le procédé comprenant :
le stockage d'informations concernant un ou plusieurs modes d'affichage exclusifs, lesdits un ou plusieurs modes d'affichage exclusifs comportant un mode d'affichage dans lequel le signal vidéo d'entrée émis par une source de signaux vidéo est temporairement modifié, et
l'application sélective de la fonction de réglage automatique sur le signal vidéo d'entrée selon le mode d'affichage du signal vidéo d'entrée et les un ou plusieurs modes d'affichage exclusifs de manière que la fonction de réglage automatique soit mise en oeuvre lorsque le mode d'affichage déterminé n'est pas égal à l'un quelconque des un ou plusieurs modes d'affichage exclusifs.

2. Procédé selon la revendication 1, dans lequel ledit signal vidéo d'entrée comporte un signal synchrone horizontal et un signal synchrone vertical, le procédé comprenant en outre :
le réglage d'un ou plusieurs modes d'affichage exclusifs avant ledit stockage des informations concernant un ou plusieurs modes d'affichage exclusifs,
la permission de l'application ou non d'une fonction de réglage automatique sur le signal vidéo,
la détermination du mode d'affichage du signal vidéo selon les signaux synchrones horizontal et vertical lorsque la fonction de réglage automatique est permise.

3. Procédé selon la revendication 2, dans lequel les un ou plusieurs modes d'affichage exclusifs comprennent le mode d'affichage du signal vidéo fourni pendant un processus d'amorçage d'un ordinateur émettant le signal vidéo auprès de l'appareil d'affichage.

4. Procédé selon la revendication 3, dans lequel la mise en oeuvre de la fonction de réglage automatique comprend :
la détection d'un intervalle de palier arrière du signal vidéo à partir du signal synchrone horizontal et/ou du signal synchrone vertical,
la détection d'une valeur H-total du signal vidéo à partir du signal synchrone horizontal et/ou du signal synchrone vertical, et
la mise en oeuvre de la fonction de réglage automatique soit lorsque l'intervalle de palier arrière détecté n'est pas égal à un intervalle de palier arrière prédéfini, soit lorsque la valeur H-total détectée n'est pas égale à une valeur H-total prédéfinie.

5. Appareil d'affichage permettant de visualiser une image en fonction d'un signal vidéo d'entrée, ledit signal vidéo d'entrée présentant un mode d'affichage comportant la résolution dudit signal vidéo d'entrée, l'appareil d'affichage comprenant :
un espace de stockage de données destiné à stocker des informations concernant un ou plusieurs modes d'affichage exclusifs, lesdits un ou plusieurs modes d'affichage exclusifs comportant un mode d'affichage dans lequel le signal vidéo d'entrée émis par une source de signaux vidéo est temporairement modifié, et
un organe de commande destiné à appliquer de manière sélective la fonction de réglage automatique sur le signal vidéo d'entrée selon le mode d'affichage du signal vidéo d'entrée et les un ou plusieurs modes d'affichage exclusifs, de manière que la fonction de réglage automatique soit mise en oeuvre lorsque le mode d'affichage déterminé n'est pas égal à l'un quelconque des un ou plusieurs modes d'affichage exclusifs.

6. Appareil d'affichage selon la revendication 5, comprenant en outre :
un module d'affichage, et
un convertisseur de résolution destiné à régler sélectivement l'état d'affichage du signal vidéo d'entrée selon un premier état d'affichage dans lequel ladite fonction de réglage automatique est appliquée, et un second état d'affichage dans lequel la fonction de réglage automatique n'est pas appliquée, de manière qu'une image correspondant au signal vidéo d'entrée puisse être visualisée sur le module d'affichage selon l'état d'affichage sélectivement réglé.

7. Appareil d'affichage selon la revendication 6, dans lequel le convertisseur de résolution règle l'état d'affichage du signal vidéo d'entrée selon le premier état d'affichage lorsque le mode d'affichage du signal vidéo d'entrée est différent des un ou plusieurs modes d'affichage exclusifs, et règle l'état d'affichage du signal vidéo d'entrée selon le second état d'affichage lorsque le mode d'affichage du signal vidéo d'entrée est l'un des un ou plusieurs modes d'affichage exclusifs.

8. Appareil d'affichage selon la revendication 5, dans lequel l'organe de commande applique sélectivement la fonction de réglage automatique sur le signal vidéo d'entrée selon la détermination du fait que le mode d'affichage du signal vidéo d'entrée correspond aux un ou plusieurs modes d'affichage exclusifs.

9. Appareil d'affichage selon la revendication 5, dans lequel l'organe de commande applique la fonction de réglage automatique sur le signal vidéo d'entrée lorsque le mode d'affichage du signal vidéo d'entrée ne correspond pas à l'un des un ou plusieurs modes d'affichage exclusifs, et n'applique pas la fonction de réglage automatique sur le signal vidéo d'entrée lorsque le mode d'affichage du signal vidéo d'entrée correspond à l'un des un ou plusieurs modes d'affichage exclusifs.

10. Appareil d'affichage selon la revendication 5, dans lequel l'organe de commande empêche que la fonction de réglage automatique soit automatiquement appliquée sur le signal vidéo d'entrée.

11. Appareil d'affichage selon la revendication 5, dans lequel le signal vidéo d'entrée est produit par un ordinateur pendant l'amorçage de l'ordinateur.

12. Appareil d'affichage selon la revendication 11, dans lequel les un ou plusieurs modes d'affichage exclusifs comprennent le mode d'affichage du signal vidéo fourni pendant le processus d'amorçage de l'ordinateur.

13. Appareil d'affichage selon la revendication 5, dans lequel le signal vidéo d'entrée comprend des signaux synchrones horizontal et vertical, et l'organe de commande applique sélectivement la fonction de réglage automatique sur le signal vidéo d'entrée selon une caractéristique du signal synchrone horizontal et/ou du signal synchrone vertical.

14. Appareil d'affichage selon la revendication 13, dans lequel la caractéristique du signal synchrone horizontal et/ou du signal synchrone vertical comprend un intervalle de palier arrière.

15. Appareil d'affichage selon la revendication 14, dans lequel l'organe de commande est configuré pour mettre en oeuvre la fonction de réglage automatique lorsque l'intervalle de palier arrière détecté n'est pas égal à un intervalle de palier arrière prédéfini.

16. Appareil d'affichage selon la revendication 13, dans lequel la caractéristique du signal synchrone horizontal et/ou du signal synchrone vertical comprend une valeur H-total du signal vidéo d'entrée.

17. Appareil d'affichage selon la revendication 16, dans lequel l'organe de commande est configuré pour mettre en oeuvre la fonction de réglage automatique lorsque la valeur H-total détectée n'est pas égale à une valeur H-total prédéfinie.

18. Appareil d'affichage selon la revendication 13, comprenant en outre :
un organe de réglage automatique destiné à permettre l'application de la fonction de réglage automatique sur les signaux vidéo d'entrée présentant des modes d'affichage différents,
dans lequel l'organe de commande empêche que la fonction de réglage automatique soit appliquée sur le signal vidéo d'entrée selon le mode d'affichage du signal vidéo d'entrée, les un ou plusieurs modes d'affichage exclusifs et la caractéristique du signal synchrone horizontal et/ou du signal synchrone vertical.

19. Appareil d'affichage selon la revendication 5, comprenant en outre :
un organe de réglage automatique destiné à permettre à l'organe de commande d'appliquer la fonction de réglage automatique sur le signal vidéo d'entrée,
dans lequel l'organe de commande n'applique pas la fonction de réglage automatique sur le signal vidéo d'entrée lorsque le mode d'affichage du signal vidéo d'entrée correspond aux un ou plusieurs modes d'affichage exclusifs.

20. Appareil d'affichage selon la revendication 5, dans lequel les un ou plusieurs modes d'affichage exclusifs sont une résolution de 640 x 350 à 85 Hz, 640 x 480 à 60 Hz, 720 x 400 à 85 Hz et/ou 800 x 600 à 60 Hz.
